# EUROPEAN PATENT SPECIFICATION

(11) **EP 0 841 856 B1**
(45) Date of publication and mention of the grant of the patent: **19.01.2000**
(21) Application number: 96925752.6
(22) Date of filing: 09.07.1996
(51) Int. Cl.: A23C 9/15, A23C 15/16

(54) **DAIRY BASED SPREAD**
BROTAUFSTRICH AUF MILCHPRODUKTBASIS
PRODUIT A TARTINER A BASE D'UN PRODUIT LAITIER

(30) Priority: 27.07.1995 EP 95202059
(43) Date of publication of application: 20.05.1998
(73) Proprietor: UNILEVER N.V., 3013 AL Rotterdam (NL); UNILEVER PLC, London EC4P 4BQ (GB)
(72) Inventor: LANTING, Feico C/O ASTRA CALVE, 33 Place des Corolles 92400 Courbevoie (FR); BIGGEL, Albert, Johann, D-87435 Kempten (DE)
(74) Representative: Kan, Jacob Hendrik, Dr.
(86) International application number: EP9603100
(87) International publication number: WO9704660

(56) References cited:
- EP-A- 0 283 101
- EP-A- 0 340 857
- WO-A-93/17565
- DE-A- 2 300 663
- DE-A- 3 324 821
- FR-A- 2 014 742
- US-A- 1 605 009
- US-A- 4 177 293
- US-A- 4 772 483

## Description

The invention relates to a creamy cultured dairy based spread suitable as a table spread for use on bread or crackers, and which spread is prepared from a dairy base, such as cream, milk, and the like, and butter-fat, e.g. such being present in cream, which is then cultured, and heated to stop further acidification.

Products prepared in such a manner have been described in British Patent Specification GB 1 261 910. In this document, spreads are described which are obtained by dispersing skim milk powder in water, adding molten butter, adding a culture cooling and re-pasteurizing. The products have a fat content of about 45%, and have a whey/casein ratio as found in milk (which is about 0.2). The products obtained have a fresh-cheese like texture and taste.

In DE 2 300 663, low calorie spreads are described prepared by pasteurizing skimmed milk, pasteurizing, homogenizing and cooling, mixing with lactic acid cultures and structuring agents, and then filling cups or tubes, and cooling it a pH of about 4.8. Such product is even when refrigerated prone to post-souring, and flocculation will occur easily, accompanied by visible whey separation.

The present invention aims at water-continuous spreads which are very suitable as butter-replacement for cold uses, such as spreading on bread or toast, as an underlayer.

Accordingly, the present invention regards a creamy, cultured dairy based water continuous spread comprising less than 35% fat, up to 4.5% milk protein, gelatin or a gelatin replacer, optionally up to 2% structuring agent, the spread having a pH value between 4.6 and 5.2, and a Stevens value hardness at 10°C of 200-500 g and of 50-250 g at 20°C, a whey to casein weight ratio higher than in milk, and the spread having a butter-like mouthfeel, texture and taste.

In a more preferred embodiment, the present invention regards a creamy, cultured dairy based water continuous spread comprising less than 35% fat, up to 4.5% milk protein, gelatin, optionally up to 2% structuring agent, the spread having a pH value between 4.6 and 5.2, and a Stevens value hardness at 10°C of 200-500 g and of 50-250 g at 20°C, a whey to casein weight ratio higher than in milk, and the spread having a butter-like mouthfeel, texture and taste.

Accordingly, the present invention provides a water-continuous, low fat spread having butter like taste and texture characteristics. The presently claimed spread derives its taste from having been cultured, i.e. at least part of the dairy ingredients having been subjected to the influence of acidulating micro-organisms like lactic acid bacteria, cheese starter cultures etc. Unlike fresh cheese, the product of the present invention has a very rich, milky taste with a creamy and butter-like impression, and hence, shows high similarity to butter.

In this description and claims the expression "spread" is intended to mean a plastic, spreadable product which can be applied onto bread at room temperature without tearing the bread. The spreads of the present invention have a Stevens value of 200-500 g at 10°C and 50-250 at room temperature (about 20°C). The expression "dairy based" refers to products of which at least 90% of the solids are derived from milk.

It is an object of the invention to provide a dairy based spread product having a fat content below 35% giving an organoleptic impression of containing considerably more fat and having a consistency comparable to that of conventional butter and butter-like spreads such as margarine. In comparison to butter, the product of the present invention is spreadable onto bread without tearing it apart at a broad temperature range, ie. at temperatures varying from refrigerator temperature (about 5°C) to room temperature (20°C) and above (30°C).

It is also an object to provide a mildly, neutral tasting product having a closed keepability of several weeks. In a preferred embodiment, the products of the invention have a closed keepability of 8 week or more, which means that no change of taste and structure occurs on storage for such a period.
Fresh cheese based products are available on the market which have pH values below 4.6; these products show an inherent acid impression on eating. Furthermore, the fresh cheese products available have the typical cheese like texture and are more "mousse-like" than the butter-like product presently found, often were found to show syneresis and provide a more sandy impression upon spreading and eating than butter and than the product of the present invention. Furthermore, a more sweet and less sour impression is obtained upon eating the product of the present invention compared to the presently available products. Melting behaviour in the mouth, and mouthfeel of the product of the present invention is clearly different than that of prior art products.

Surprisingly, it was found that butter like products can be obtained which can be used as a replacement for butter which benefit the pleasant characteristics of butter, such as fatty impression, dairy taste, milky taste and aftertaste, still neutral and hence, very suitable for use as an underlayer on bread, toast, and the like, and which has a better spreadability than butter at the colder users temperature range.

The present product is obtained by fermenting a dairy base with lactic acid type of cultures such as those which are normally used for acidification of milk products. Examples of such lactic acid type of cultures are Streptococcus lactis, yoghurt cultures such as Streptococcus thermophilus, Lactobacillus delbrueckii subspecies bulgaricus, and Lactobacillus helveticus. In a preferred embodiment of the invention, Streptococcus thermophilus and Lactobacillus bulgaricus are used. The fermentation is stopped in a suitable manner - such as by heating - at a pH value between 4.0 and 5.2, and preferably at a pH value between 4.6 and 5.2. The cultures used are no longer active in the end product to be obtained. The product of the invention has a pH value between 4.6 and 5.2, preferably between 4.7 and 5.2, and most preferred between 4.8 and 5.0.

The expression "cultured micro organisms" as used in this description and claims is intended not to comprise any microorganisms which not unusually are unintendedly present in dairy products despite hygiene-measures aiming to prevent that. The product of the invention can contain some spore formers which are not destroyed by pasteurization, but cannot grow under the chilled storage conditions used for the presently claimed products.

The product will have a whey protein to casein weight ratio which is higher than that found in milk. It was found that the combination of whey protein concentrate which has been added to the product in addition and in combination with the whey protein present in the dairy ingredients used provides a very good water binding. By adding undenatured whey protein, and processing such as homogenizing and heating, in combination with the specific pH as now claimed, a product is obtained showing very little or no syneresis and a very specific, butter comparable texture. Preferably, the ratio whey protein to casein in the product preferably ranges between 0.7 and 1.0.

For obtaining the required spreadability and mouthfeel some gelatin will suitably be present. The product comprises at least 0.5 wt% gelatin (based on total weight of the product), and further preferred at least 0.6 wt%. No further beneficial effect was observed for levels above 2%, compared to 2% levels. It was found that if gelatin of a bloom strength of 250, the best products are obtained if 0.8 - 1.2 wt% gelatin is used, based on fat free material. Preferred is to use 1.1 wt% gelatin. If gelatin of another bloom strength is used, other weight ranges are applied providing an equivalent structuring performance. As these days it is sometimes desired to have no gelatin present in consumer products, a very specific embodiment of this invention allows that instead of gelatin, a so called gelatin replacer is used. Gelatin replacers are components or compositions which have similar mouthfeel behaviour, and similar performance, such as water binding and melting properties compared with gelatin. Examples of suitable gelatin replacers are described in, inter alia, European Patent Application EP 496466 and in EP 474299 and are often very specific or specifically treated components or compositions. Amounts used are in addition to those indicated for the structuring agent below.

The product contains less than 4.5 wt% of milk protein. It was found that if more protein is present, a thick, cheese-like product is obtained. Preferably, the milk protein level ranges between 2 and 4.5 wt%, preferably between 2.3 and 4.2 wt%, and most preferred between 2.7 and 3.9 wt%.

The fat level of the product of the invention is below 35 wt%, the fat present being substantially dairy fat. Preferably the spread comprises less than 30 wt% and particularly less than 28 wt% fat. Suitably, the product will contain more than 15 wt% of fat.
The fat present in the product can suitably be obtained from the dairy source used, such as cream, whole milk, protein enriched milk, concentrated milk, filled milk and mixtures of two or more thereof, the use of cream as at least one fat source being preferred.

The dairy source which is used for obtaining the presently claimed products can, in addition to those mentioned above, also be skim milk.

Optionally, up to 1%, and preferably up to 0.5%, based on the total weight of the end product, of a structuring agent not being a protein is present. Examples of such agents are locust bean gum, carboxy methyl cellulose, xanthan, guar gum, alginate or combinations thereof. Other suitable agents not mentioned here can be applied as well. Although higher amounts of such a structuring agent can be applied, the presence in higher amounts will negatively influence the taste and mouthfeel of the product.
The spreadability may very suitably be controlled by adding the structuring agent in such amount that the final product will get a Stevens value at 10°C (method for determination defined in this specification) between 200 and 500 g and in particular between 225 and 400 g.

Optionally, usual additives for spreads such as salt, herbs, spices, flavours, colouring matter, preservatives and the like may be added, although it is believed that for obtaining a suitable underlayer, butter like spread none of these is needed. Normally, for use as a butter like spread at least some salt will be added.

The invention also provides a process for obtaining a product according to the invention, the process comprising the pasteurizing of cream, skim milk, whole milk, concentrated milk, filled milk and mixtures of two or more thereof, additional whey protein and, optionally, structuring agent, cooling down to culturing temperature, inoculating with an acidulating bacteria culture and fermenting until a pH of less than 5.5, preferably less than 5.2 is obtained, controlling the pH value to ≥ 4.5, preferably to a pH value ≥ 4.6, and further preferred ≥ 4.8, optionally adding additional cream, sweet cream, or other dairy product listed above, until a pH value of 4.6 to 5.2 is obtained, homogenizing the resulting product at 50-600 bar, preferably between 75 and 400 bar, and further preferred between 100 and 300 bar while at a temperature above 35°C until the required structural properties are obtained, the components not listed here, for example such as the gelatin or gelatin replacer, preservatives and the like if so desired being added at any suitable moment in this process.

In the process, acidifying and homogenization can be carried out in any order. It is preferred to homogenize at a temperature above 60°C.

For obtaining an increased closed keepability the spread is filled into containers while at a temperature in excess of 65°C which containers then are hermetically sealed. By filling at a temperature in excess of 70°, a still better keepability is obtainable. By this higher temperature, the shelf life of the product in the closed container can be 8 weeks or even more.

The invention will be exemplified in the following examples of some practical embodiments thereof. Percentages used in the description, examples and claims refer to weights, unless expressly indicated otherwise.

The "Stevens" hardness St, expressed in grams, was determined 1 week after manufacturing the product when stored at 5°C and thereafter equilibrated for 24 hours at the temperature of 9 or 11°C as indicated, using a 0.5 inch φ cylinder in a Stevens-LFRA Texture Analyzer (ex Stevens Advanced Weighing Systems, Dunmore, U.K.) load range 1000 g operated "normal" and set at 20 mm penetration depth and 1.0 mm/s penetration rate. In the present document room temperature means 25°C.

For a better understanding of the invention some preferred embodiments thereof will be described. Parts and percentages are by weight unless indicated otherwise.

### Example 1

90 parts dairy cream standardized to a fat content of 26% are pasteurized at 85°C for about 10 minutes, such that denaturation of the whey protein occurs, and mixed with a solution of 0.8 parts gelatin, 0.8% parts whey protein concentrate 70% and 0.3% parts salt, dissolved in 8 parts skimmilk.
After cooling down to a suitable temperature for culturing, a common acidulating culture is added, whereafter the fermentation is allowed to proceed until a pH value of about 4.8 is reached. The fermentation is stopped by heating to 80°C.
The product so obtained is homogenized at 100 bar, filled in ¼l containers, cooled down to below 10°C and stored at chill temperatures.
A smoothly spreadable product is obtained having a Stevens value of 300 to 330 at 10°C.

### Example 2

The process of Example 1 is repeated with the difference that the fermentations stopped after a pH value of 4.3 is reached. Thereafter circa 20% sweet dairy cream having a fat content of 40% is added, until the pH value is between 4.7 and 4.8.

For flavouring purposes, additives like spices, herbs, nuts, fresh, preserved or dried fruits could be mixed into the spread of the present invention.

### Example 3

Dairy cream (90 parts by weight) was standardized to a fat content of 30% by the addition of skimmed milk. 1.75 wt% whey protein concentrate (70% protein) and 0.3% locust bean gum were added, whereby, after mixing, the obtained composition was pasteurized at 85°C for about 10 minutes. The composition was cooled down to culturing temperature, and mixed with a pasteurized solution of 0.7 wt% gelatin, 0.3 wt% kitchen salt, carotene and skim milk, so that the fat content of the mixture obtained was 26%. Then, a first homogenization step was carried out at elevated pressure. To the obtained homogenized composition, a yoghurt culture was added, whereafter the fermentation was allowed to proceed until a pH value of about 4.8 was reached. The fermentation was then stopped by heating to 60°C.
The product so obtained was then homogenized once more at elevated pressure, and heated to a temperature of 75°C for filling into 150 g containers, cooled down to below 10°C and stored at chill temperature. The hardness was measured according to the procedure described above and found to be 337 g, the pH of the product was 4.83. The dairy protein content was 3.8%, the fat content 26%. The product was then tested for its performance. Test method and results are indicated under "Quantitative Descriptive Analysis test".

For comparison, products were obtained from the supermarket in Germany and compared to the product of the present invention. The products were sold under the names "Rotkäppchen", "Aufs Brot", and "Yella"

Composition analysis were performed and listed below in Table A.

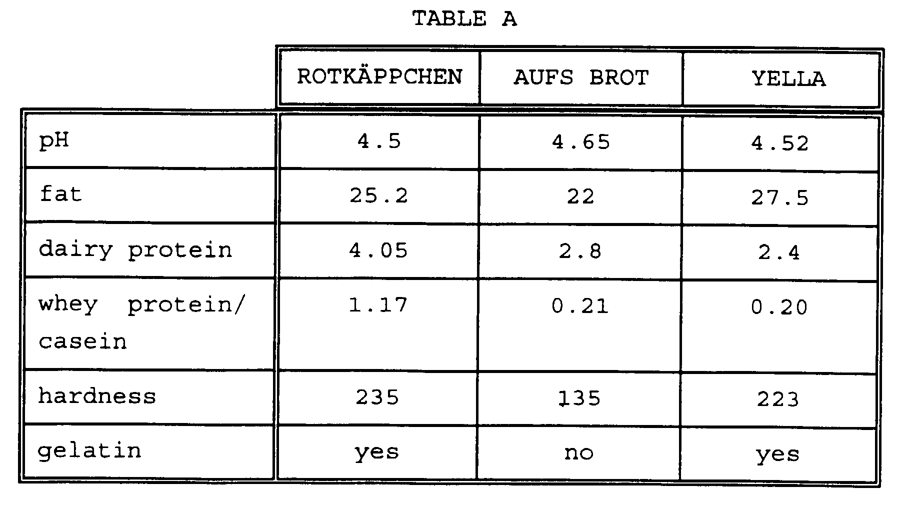

The viscosity of all products was measured using a Carrimed CSL 500 reometer. The reometer has a cone-plate geometry (diameter of the cone was 4 cm, cone angle was 2°). The viscosity was measured using a shear rate γ of 10 s⁻⁻¹ and the temperature T being 20°C. Results are indicated in Table B.

| Sample | viscosity (γ of 10 s⁻⁻¹) |
|---|---|
| Ex. 3 (invention) | 55 Pa.s |
| Rotkäppchen | 33 Pa.s |
| Aufs Brot | 23 Pa.s |
| Yella | 22 Pa.s |

### Quantitative Descriptive Analysis test

The product obtained at Example 3 and the commercial available products were subjected to a consumer test. Hereto, 16 women, screened at several tests for identification of the basis tastes and more or less familiar odours, recognition of odours and tastes, and verbal creativity were selected. The panellists were trained extensively in describing and assessing the sensorial aspects of Dairy based spreads. The attributes were categorised in appearance (16 attributes), spreading behaviour, including the appearance during spreading (12 attributes), odour (8 attributes), mouthfeel (13 attributes), taste (32 attributes), aftertaste (10 attributes), and after-mouthfeel (3 attributes). At the end of the training period, test results showed that the attributes were suitable to distinguish reliably between the products. 16 panellists took part in the experiment.

The spreads were presented two times in balanced test design under normal daylight conditions at a temperature of about 10°C. A score between 0 and 100 was given for each attribute, the total of the scores of all participants was calculated and divided by 16, and so the mean score was obtained. An analysis of variance with product and presentation as factors was performed to see which products were different. Significance was found were p was < .10

No products available on the market were found to be offered as butter like spreads. "Aufsbrot" is indicated as product AB, "Rotkäppchen" as RK, and "Yella" as YE

From testing on spreadability, taste, appearance and aftertaste, it became clear that the product according to the invention had the best similarity to butter.
The average score for the mouthfeel impression being described as "fat" scored 47, compared with 20 (AB), 31 (RK) and 32 (YE) of the products on the market. On taste scoring, the taste sensation described as "cream" scored 41, compared to 33 (AB), 31 (RK) and 28 (YE) for the products on the market. An aftertaste impression indicated as "milk" the product of Example 3 scored 44, compared to 33 (AB), 33 (RK) and 31 (YE) for the marketed products, whereas the aftertaste impression indicated as "butter" scored 31 for the product of the invention and 25 (AB), 24 (RK) and 19 (YE) for the marketed products. Thus, the product of Example 3 had on issues most important for butter similarity items scores of 47, 41, 44 and 31, compared to for AB: 20, 33,33 and 25; for RK: 31, 31, 33 and 24; and for YE: 32, 28, 31, and 19. The test clearly showed that the product of the invention had the highest scores on taste attributes such as milk*, cream, butter and sweet and the lowest scores on sourlike attributes like yogurt, buttermilk and lemon, and also on cheese. Furthermore, the product of the invention was significantly less sandy and mousse like than commercial products, and provided the best scores on butter- and margarine-like mouthfeel. The commercial products all scored significantly higher on cheese-like attributes.
* significant differences (p<.1) found with Aufs Brot and Yella. Scored better than Rotkappchen, but the difference was not significant.

## Claims

1. Creamy, cultured dairy based water continuous spread comprising less than 35% fat, up to 4.5% milk protein, gelatin or a gelatin replacer, optionally up to 2% structuring agent, the spread having a pH value between 4.6 and 5.2, and a Stevens value hardness at 10°C of 200-500 g and of 50-250 g at 20°C, a whey protein to casein weight ratio higher than in milk, and the spread having a butter-like mouthfeel, texture and taste.

2. Spread according to claim 1, wherein gelatin is present.

3. Spread according to claim 2, wherein at least 0.5 wt% gelatin is present.

4. Spread according to any one of claims 1 to 3, wherein the spread comprises less than 30% fat and preferably less than 28%.

5. Spread according to any one of claims 1 to 4, wherein the spread has a pH value of at least 4.7 and preferably between 4.8 and 5.0.

6. Spread according to any one of claims 2 to 5, wherein the spread comprises up to 0.8 to 1.2% and preferably 0.9 to 1.1% by weight of gelatin of a bloom strength of 250 or, if other gelatin is applied, in amounts providing equivalent structuring, the weight amount indicated being based on fat-free material present in the product.

7. Spread according to any one of claims 1 to 6, wherein the spread comprises 2.3 to 4.2 wt% milk proteins.

8. Spread according to any one of claims 1 to 7, wherein the ratio whey protein to casein ranges between 0.7 and 1.0.

9. A process for obtaining a product according to any one of claims 1-8, comprising the pasteurizing of cream, skim milk, whole milk, concentrated milk, filled milk and mixtures of two or more thereof, additional whey protein and, optionally, structuring agent, cooling down to culturing temperature, inoculating with an acidulating bacteria culture and fermenting until a pH of less than 5.5, preferably less than 5.2 is obtained, controlling the pH value to ≥ 4.5, preferably to a pH value ≥ 4.6, and further preferred ≥ 4.8, optionally adding additional cream, sweet cream, or other dairy product listed above, until a pH value of 4.6 to 5.2 is obtained, homogenizing the resulting product at 50-600 bar, preferably between 75 and 400 bar, and further preferred between 100 and 300 bar while at a temperature above 35°C until the required structural properties are obtained, the components not listed here being added at any suitable moment in this process.

10. A process according to claim 9, wherein a homogenization step is carried out prior to adding a culturing agent.

11. A process according to any one of claims 9 to 10, wherein the spread is filled into containers while at a temperature in excess of 65°C which containers then are hermetically sealed.

## Patentansprüche

1. Sahniger, kultivierter, wasserkontinuierlicher Brotaufstrich auf Milchproduktbasis, umfassend weniger als 35% Fett, bis zu 4,5% Milchprotein, Gelatine oder einen Gelatineersatz, fakultativ bis zu 2% Strukturierungsmittel, wobei der Aufstrich einen pH-Wert zwischen 4,6 und 5,2 und eine Stevens-Wert-Härte bei 10°C von 200 bis 500 g und von 50 bis 250 g bei 20°C aufweist, wobei das Gewichtsverhältnis von Molke zu Kasein höher als dasjenige in Milch ist und der Aufstrich ein butterartiges Mundgefühl, ebensolche Textur und Geschmack aufweist.

2. Brotaufstrich nach Anspruch 1, in welchem Gelatine vorliegt.

3. Brotaufstrich nach Anspruch 2, in welchem mindestens 0,5 Gew.-% Gelatine vorliegen.

4. Brotaufstrich nach irgendeinem der Ansprüche 1 bis 3, wobei der Brotaufstrich weniger als 30% Fett und vorzugsweise weniger als 28% umfaßt.

5. Brotaufstrich nach irgendeinem der Ansprüche 1 bis 4, wobei der Brotaufstrich einen pH-Wert von mindestens 4,7 und vorzugsweise zwischen 4,8 und 5,0 aufweist.

6. Brotaufstrich nach irgendeinem der Ansprüche 2 bis 5, wobei der Brotaufstrich bis zu 0,8 bis 1,2% und vorzugsweise O,9 bis 1,1%, bezogen auf das Gewicht, Gelatine mit einer Bloom-Zahl von 250 oder, wenn eine andere Gelatine verwendet wird, in Mengen umfaßt, die eine äquivalente Strukturierung ergeben, wobei die angegebene Gewichtsmenge auf das im Produkt vorliegende fettfreie Material bezogen ist.

7. Brotaufstrich nach irgendeinem der Ansprüche 1 bis 6, wobei der Brotaufstrich 2,3 bis 4,2 Gew.-% Milchproteine umfaßt.

8. Brotaufstrich nach irgendeinem der Ansprüche 1 bis 7, in welchem das Verhältnis von Molkeprotein zu Kasein zwischen 0,7 und 1,0 liegt.

9. Verfahren zur Herstellung eines Produktes nach irgendeinem der Ansprüche 1 bis 8, umfassend das Pasteurisieren von Sahne, Magermilch, Vollmilch, konzentrierter Milch, angereicherter Milch oder Mischungen aus zwei oder mehreren davon, zusätzlich Molkeprotein und fakultativ Strukturierungsmittel, das Abkühlen auf Kultivierungstemperatur, Animpfen mit einer ansäuernden Bakterienkultur und Fermentiern bis zur Erzielung eines pH-Wertes von weniger als 5,5, vorzugsweise weniger als 5,2, wobei der pH-Wert auf ≥4,5, vorzugsweise ≥4,6 und insbesondere ≥4,8 gesteuert wird, fakultatives Zugeben von zusätzlicher Sahne, Süßrahm oder einem anderen oben aufgeführten Molkereiprodukt bis zur Erreichen eines pH-Wertes von 4,6-5,2, Homogenisieren des erhaltenen Produktes bei 50-600 bar, vorzugsweise zwischen 75 und 400 bar, und weiter bevorzugt zwischen 100 und 300 bar bei einer Temperatur oberhalb von 35°C bis zum Erreichen der geforderten Struktureigenschaften, wobei die hier nicht aufgeführten Komponenten, zu irgendeinem geeigneten Zeitpunkt in diesem Verfahren zugefügt werden.

10. Verfahren nach Anspruch 9, bei welchem der Homogenisierungsschritt vor der Zugabe des Kultivierungsmittels durchgeführt wird.

11. Verfahren nach irgendeinem der Ansprüche 9 bis 10, bei welchem der Aufstrich noch bei einer Temperatur über 65°C in Behälter abgefüllt wird, die dann hermetisch verschlossen werden.

## Revendications

1. Produit à tartiner crémeux, à phase aqueuse continue, à base d'un produit laitier mis en culture comprenant moins de 35 % de matière grasse, jusqu'à 4,5 % de protéine du lait, de la gélatine ou un produit de remplacement de la gélatine, de façon optionnelle jusqu'à 2 % d'un agent de structuration, le produit à tartiner ayant une valeur de pH comprise entre 4,6 et 5,2, et une valeur de dureté de Stevens à 10°C de 200 - 500 g et de 50 - 250 g à 20°C, un rapport en masse entre la protéine de petit lait et la caséine supérieur à celui que l'on a dans le lait, et le produit à tartiner procurant une sensation en bouche, une texture et un goût similaires à ceux du beurre.

2. Produit à tartiner selon la revendication 1, dans lequel la gélatine est présente.

3. Produit à tartiner selon la revendication 2, dans lequel au moins 0,5 % de gélatine est présente.

4. Produit à tartiner selon l'une des revendications 1 à 3, dans laquelle le produit à tartiner comprend moins de 30 % de matière grasse, et de préférence moins de 28 %.

5. Produit à tartiner selon l'une des revendications 1 à 4, dans lequel le produit à tartiner a une valeur de pH d'au moins 4,7 et de préférence, la valeur de pH est comprise entre 4,8 et 5,0.

6. Produit à tartiner selon l'une des revendications 2 à 5, dans lequel le produit à tartiner comprend jusqu'à 0,8 à 1,2 %, et de préférence de 0,9 à 1,1 % en masse de gélatine ayant une capacité d'efflorescence de 250 ou, si on applique une autre gélatine, dans des quantités fournissant une structuration équivalente, la quantité en masse indiquée étant basée sur la masse de matériau ne contenant pas de matière grasse présent dans le produit.

7. Produit à tartiner selon l'une des revendications 1 à 6, dans lequel le produit à tartiner comprend de 2,3 à 4,2 % en masse de protéine de lait.

8. Produit à tartiner selon l'une des revendications 1 à 7, dans lequel le rapport entre la protéine de petit lait et la caséine est compris dans la gamme allant de 0,7 à 1,0.

9. Un procédé pour obtenir un produit selon l'une des revendications 1 à 8, comprenant les étapes consistant à pasteuriser de la crème, du lait écrémé, du lait concentré, du lait supplémenté et des mélanges de deux ou plusieurs de ces produits avec de la protéine de petit lait additionnelle et, de façon optionnelle un agent structurant, à refroidir le mélange à la température de culture, à inoculer le mélange avec une culture de bactéries acidifiantes et à laisser fermenter jusqu'à l'obtention d'un pH ayant une valeur inférieure à 5,5, de préférence inférieure à 5,2, à contrôler la valeur de pH à un niveau inférieur ou égal à 4,6 et de façon plus préférable inférieur ou égal à 4,8, de façon optionnelle à ajouter de la crème supplémentaire, de la crème douce ou un autre produit laitier cité ci-dessus jusqu'à l'obtention d'une valeur de pH comprise entre 4,6 et 5,2, à homogénéiser le produit qui en résulte à une pression de 50 - 600 bar, de préférence à une pression comprise entre 75 et 400 bar, et de la façon la plus préférentielle à une pression comprise entre 100 et 300 bar alors que la température est supérieure à 35°C, et ce jusqu'à ce que soient obtenues les qualités structurelles requises, les composants non énumérés ici tels que par exemple la gélatine ou le produit de remplacement de la gélatine, les agents de conservation et autres produits similaires pouvant, s'ils sont souhaités, être ajoutés à n'importe quel moment approprié au cours de ce procédé.

10. Un procédé selon la revendication 9, dans lequel on procède à une étape d'homogénéisation avant d'ajouter un agent de mise en culture.

11. Un procédé selon l'une des revendications 9 ou 10, dans lequel le produit à tartiner est versé dans des récipients alors que sa température est supérieure à 65°C, lesdits récipients étant ensuite hermétiquement fermés.
